# EUROPEAN PATENT SPECIFICATION

(11) **EP 0 865 866 B1**
(45) Date of publication and mention of the grant of the patent: **30.10.2002**
(21) Application number: 98103753.4
(22) Date of filing: 04.03.1998
(51) Int. Cl.: B23Q 7/14

(54) **Pallet changer**
Palettenwechsler
Changeur de palettes

(30) Priority: 14.03.1997 JP 7914197
(43) Date of publication of application: 23.09.1998
(73) Proprietor: KITAMURA MACHINERY CO., LTD., Takaoka-shi, Toyama-ken 939-11 (JP)
(72) Inventor: Kitamura, Koichiro, Takaoka-shi, Toyama-ken, 939-11 (JP); Kitamura, Akihiro, Takaoka-shi, Toyama-ken, 939-11 (JP); Taniguchi, Katsuji, Takaoka-shi, Toyama-ken, 939-11 (JP); Kitamura, Kousaku, Takaoka-shi, Toyama-ken, 939-11 (JP); Yamada, Shigeru, Takaoka-shi, Toyama-ken, 939-11 (JP); Saito, Takashi, Takaoka-shi, Toyama-ken, 939-11 (JP)
(74) Representative: Patentanwälte Ruff, Wilhelm, Beier, Dauster & Partner

(56) References cited:
- DE-A- 3 111 706
- FR-A- 2 488 177
- JP-A- 4 013 536
- US-A- 4 679 286
- PATENT ABSTRACTS OF JAPAN vol. 097, no. 009, 30 September 1997 & JP 09 117840 A (KUBOTA SEIKI KK), 6 May 1997

## Description

### BACKGROUND OF THE INVENTION

The present invention relates to a pallet changer provided with two pallet pools for the conveyance of a pallet to a machine tool. It is here assumed that the term "conveyance" means one or both of loading and unloading.

### PRIOR ART

It is already known a pallet changer in connection with a machine tool as disclosed in DE-A1-31 11 706, which represents the closest prior art. The pallet changer has two fixed pallet pools which are interconnected at their side remote from the machine tool by a third fixed pallet pool. The machine tool has a movable pallet pool for moving a workpiece to the spindle of the machine tool.

The prior art will be described below with reference to FIGS. 4 to 6, of which FIG. 4 is a top view showing a conventional pallet changer and a machine tool, FIG. 5 is a front view thereof, and FIG. 6 is a side view of the pallet changer.

A pallet changer 1, which is disposed next to a machine tool 2, is provided with two fixed pallet pools A and B for the conveyance of a pallet P to a table 4 of the machine tool 2. In each pallet pool is disposed a cylindrical locking means 37 for keeping the pallet stationary. This pallet changer is what is called a shuttle type pallet changer.

According to the conventional pallet changer, loading and unloading of the pallet P are performed alternately in the two fixed pallet pools A and B, and the replacement of works is conducted alternately in the positions of A and B at every replacement. Therefore, the worker is required to reciprocate between the front side (pool A) and the rear side (pool B) of the machine tool.

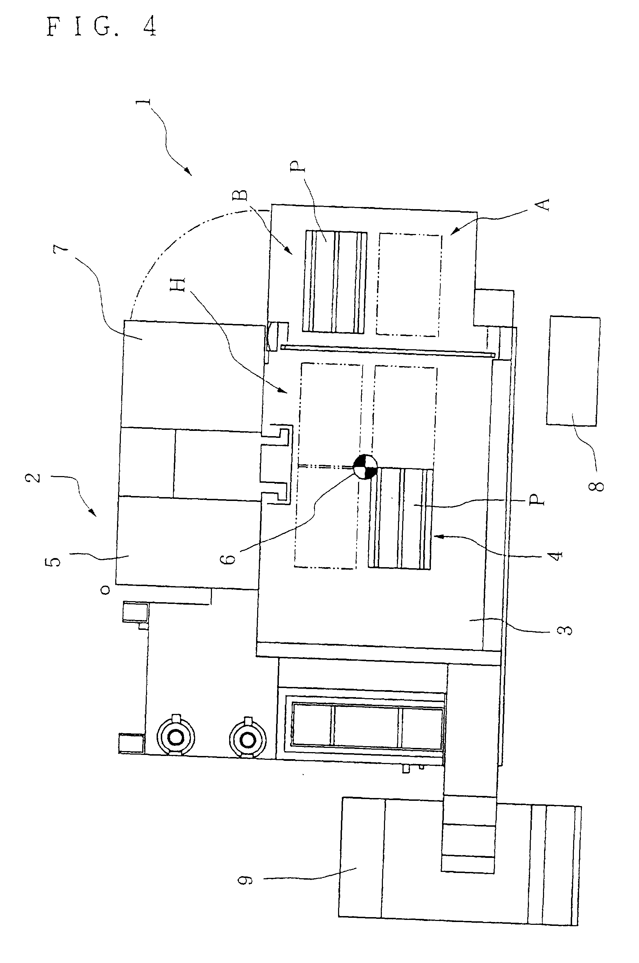

The machine tool shown in FIGS. 4 to 6 is of an ordinary type and is provided with a base 3, table 4, column 5, spindle 6, control box 7, operating panel 8, chip bucket 9, table driving means 61, and hydraulic system 38.

However, it is troublesome for the worker to reciprocate between the pools A and B at every replacement of works, and the movement of a work to the next stage cannot be done smoothly.

### SUMMARY OF THE INVENTION

It is an object of the present invention to provide a pallet changer having two fixed pallet pools for the conveyance of a pallet to a machine tool and capable of replacing works always at a predetermined position on a pallet moving path.

According to the present invention, a pallet changer has two fixed pallet pools for the conveyance of a pallet to a machine tool, wherein a movable pallet pool is provided for moving the pallet between the two fixed pallet pools, whereby the work on the pallet can be changed at a predetermined position on the pallet moving path.

There may be adopted a construction in which one of the two fixed pallet pools is used as a stand-by pool to be used exclusively for loading, while the other fixed pallet pool is used as a unloading pool to be used exclusively for unloading, and the work on the pallet is changed at a moving path position on this side of the stand-by pool.

Preferably, the movable pallet pool comprises a movable stage, a first drive means for moving the movable stage in one direction and a second drive means for moving a pallet in other directions, the first and second drive means being each of a chain drive type, a cylinder drive type, or a feed screw drive type.

### BRIEF DESCRIPTION OF THE DRAWINGS

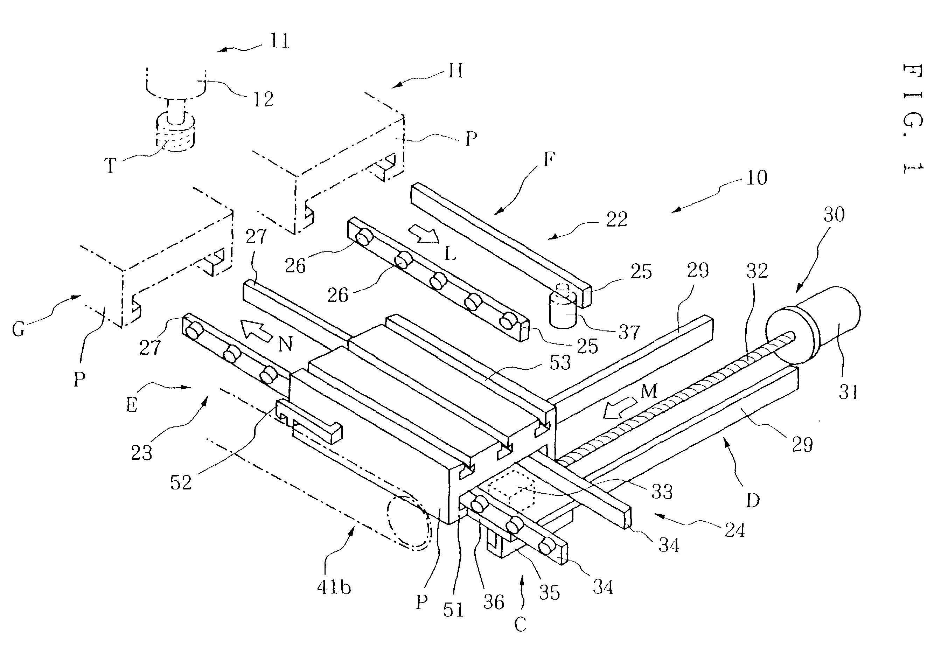

FIG. 1 is a perspective view showing schematically a principal portion of a pallet changer according to the present invention:

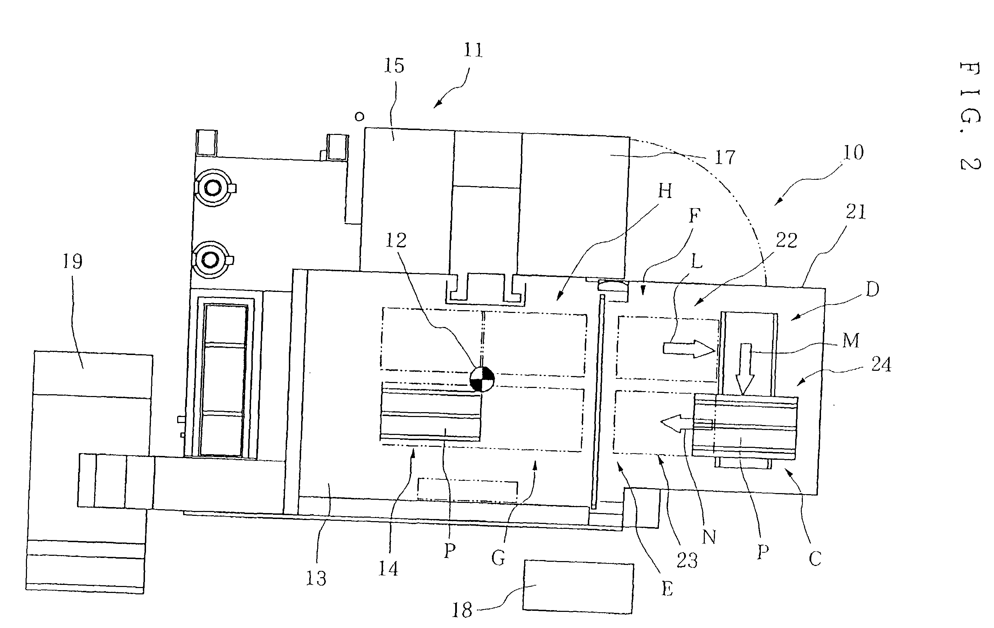

FIG. 2 is a top view showing schematically a state in which the pallet changer is disposed next to a machine tool, and a conveyor means shown in FIGS. 2 and 1 are used in different modes;

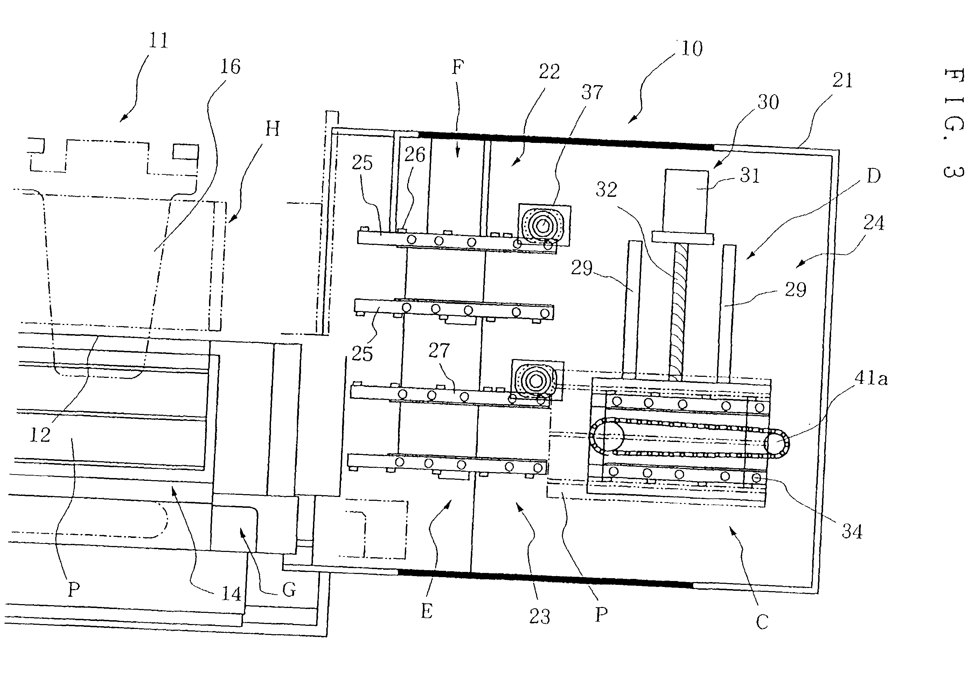

FIG. 3 is an enlarged top view showing the pallet changer of the invention and a portion of the machine tool;
FIG. 4 is a top view of a conventional pallet changer and a machine tool;

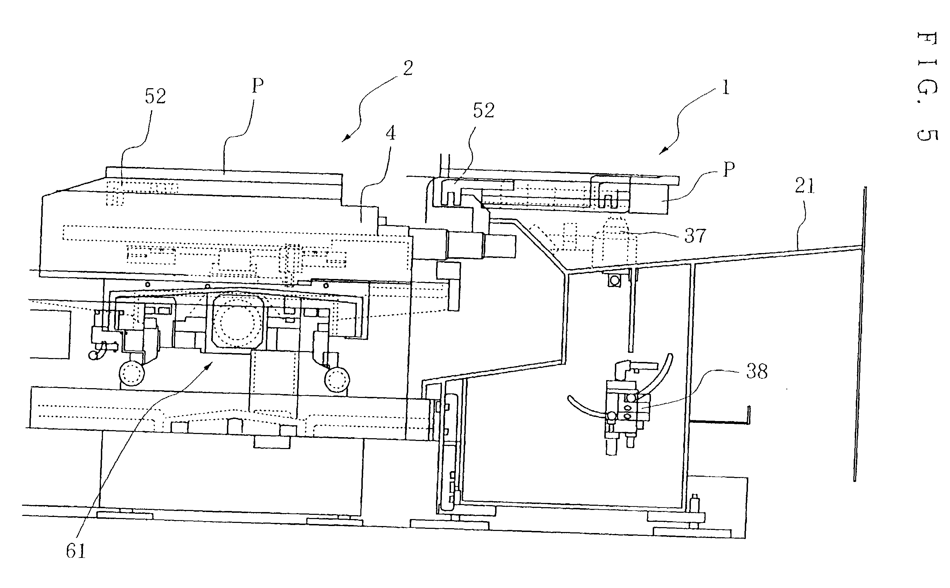

FIG. 5 is a front view thereof; and

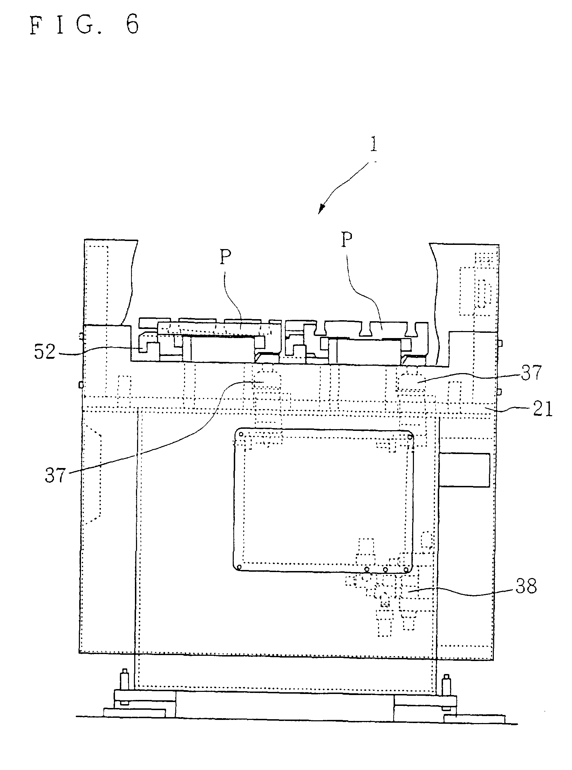

FIG. 6 is a side view of the conventional pallet changer.

### EMBODIMENT

An embodiment of the present invention will be described below with reference to FIGS. 1 to 3.

FIG. 1 is a perspective view showing schematically a principal portion of a pallet changer according to the present invention, FIG. 2 is a top view of the pallet changer and a machine tool, and FIG. 3 is an enlarged top view of the pallet changer shown in FIG. 2 and the vicinity thereof.

A machine tool 11, which is an ordinary type of a machining center, comprises a base 13, a column 15, a spindle head 16 mounted movably to the column 15, a spindle 12 incorporated in the spindle head 16, an XY table 14 mounted movably on the base, a control panel 17. an operating panel 18, and a chip bucket 19.

A pallet changer 10, which is disposed next to the machine tool 11, cooperates with the XY table 14 of the machine tool.

The pallet changer 10 is constituted using a base frame 21 as a base. On the base frame 21 are provided two fixed pallet pools 22, 23 and one movable pallet pool 24.

In this embodiment, when seen from the front of the machine tool, the fixed pallet pool 22 located on the inner side functions as a pallet pool exclusive for unloading, while the fixed pallet pool 23 located on this side functions as a pallet pool exclusive for loading.

The fixed pallet pools 22 and 23 are formed by two rails 25 and two rails 27, respectively, which are fixed to the base frame 21. Each of the rails is provided with a plurality of rollers 26 rotatably. Further, the fixed pallet pools 22 and 23 are each provided with a cylindrical locking means 37 for keeping a pallet stationary. The locking means 37 comes into engagement with a recess formed in the pallet.

Next to the two fixed pallet pools 22 and 23 is disposed a movable pallet pool 24 for moving a pallet P between the two fixed pallet pools 22 and 23.

The movable pallet pool 24 is provided with two rails 29 fixed to the base frame 21 and a movable stage 36 which can reciprocate along the rails 29. The rails 29 are also provided with an appropriate number of rollers (not shown) and are laid perpendicularly to the rails 25 and 27 of the fixed pallet pools 22 and 23.

On the underside of the movable stage 36 are formed two guide legs 35, which are guided respectively by the corresponding rails 29 (or rollers).

The movable stage 36 reciprocates along the rails 29 by a moving means 30. The moving means 30 comprises a servo-motor 31, a ball screw 32 and a nut 33. The servo-motor 31 is fixed to the base frame 21. One end of the ball screw 32 is connected to an output shaft of the servo-motor 31 and the opposite end thereof is supported rotatably by a support portion (not shown) formed on the base frame 21. The nut 33 is fixed to the bottom of the movable stage 36 and is in mesh with the ball screw 32.

Two rails 34 are laid on the upper surface of the movable stage 36. The rails 34 are also provided with rollers and run in parallel with the rails 25 and 27 of the fixed pallet pools.

The movable stage 36 is provided with a chain drive type pallet conveyor means 41a or 41b. The pallet conveyor means 41a and 41b shown in FIGS. 1 and 3, respectively, are used in different modes. Both are the same in basic structure and different in positions where they are disposed.

The pallet conveyor means 41a and 41b, which are of a chain drive type, convey the pallet P between the rails 34 of the movable stage and the rails 25, 27 of the fixed pallet pools.

The pallet P has a hook 52 on a side face thereof, and an engaging member (not shown) provided on the chain side comes into engagement with the hook 52. Slots 53 for use in fixing a work are formed in the upper surface of the pallet P.

A splash guard is provided around a machining area of the body of the machine tool, and an opening/closing door of the splash guard is disposed between the pallet changer 10 and the body of the machine tool 11. The opening/closing door is adapted to open and close automatically during conveyance of the pallet P.

A work changing procedure in this embodiment will be described below briefly.

First, the XY table 14 of the machine tool is moved to move the pallet P with a machined work thereon up to a position H, and the pallet P fixed to the XY table 14 is unclamped.

Then, the pallet P is moved from the XY table up to the position, indicated at F, of the fixed pallet pool 22. It is optional whether this movement is to be done using moving means on the machine tool table side or conveying means on the pallet changer side.

Then, the movable stage 36 is moved to align the rails 34 of the movable stage with the rails 25 of the fixed pallet pool 22. This alignment of the rails by the movable stage 36 may be performed in advance because the replacement of works can be done more quickly.

Next, using the conveyor means 41a (41b), the pallet P is moved from the rails 25 of the fixed pallet pool 22 up to the rails 34 of the movable stage. With this movement, the pallet P shifts from position F to position D.

Thereafter, using the moving means 30, the movable stage 36 is moved in the direction of arrow M to move the pallet P from position D to position C, at which position C there is performed replacement of works. It is an important point that the replacement of works can be done always at a predetermined position (position C). The worker is not required to move for the replacement of works.

After the replacement of works, the pallet P is shifted from the rails 34 of the movable stage onto the rails 27 of the fixed pallet pool 23, using the conveyor means 41a (41b), where the pallet P now carrying a new work thereon is locked and allowed to stand by.

Thus, according to the pallet changer of the present invention provided with two fixed pallet pools for the conveyance of a pallet to a machine tool, the replacement of works can be done always at a predetermined position on the pallet moving path.

The present invention is not limited to the above embodiment. For example, the fixed pallet pool 23 located on this side can be used as an unloading pool and the fixed pallet pool 22 located on the inner side can be used as a stand-by pool. In this case, the replacement of works can be done at position C or at another position on the pallet moving path.

## Claims

1. A pallet changer placed adjacent to a machine tool, including:
two fixed pallet pools each having a fixed rail for conveying a pallet to and from the machine tool;
a movable pallet pool (24) having a movable rail,
means for moving the movable rail in a reciprocating manner between said first and second fixed rails,
**characterized in that** the movable pallet pool (24) is arranged at the end of the fixed rails remote from the machine tool and is part of the pallet changer.

2. A pallet changer according to claim 1, wherein each of the rails has a plurality of rollers for guiding the pallet.

3. A pallet changer according to claim 1, wherein said movable pallet pool comprises a movable stage (36), a first drive means (30) for moving the movable stage (36) in one direction (M), and a second drive means (41) for moving the pallet (P) in another direction (N, L).

4. A pallet changer according to claim 1, wherein said movable rail is slidably supported by a fixed rail.

## Patentansprüche

1. Benachbart zu einer Werkzeugmaschine angeordneter Palettenwechsler, mit:
zwei festen Palettenanordnungen jeweils mit einer festen Schiene zum Transport einer Palette zu einer und von einer Werkzeugmaschine;
einer bewegbaren Palettenanordnung (24) mit einer bewegbaren Schiene,
Mitteln zum Bewegen der bewegbaren Schiene in einer hin und
her gehenden Weise zwischen der ersten und zweiten festen Schiene;
**dadurch gekennzeichnet, dass** die bewegbare Palettenanordnung (24) an dem von der Werkzeugmaschine entfernten Ende der festen Schienen angeordnet ist und einen Teil des Palettenwechslers bildet.

2. Palettenwechsler nach Anspruch 1, bei dem jede der Schienen eine Vielzahl von Rollen zum Führen der Palette aufweist.

3. Palettenwechsler nach Anspruch 1, bei dem die bewegbare Palettenanordnung eine bewegbare Bühne (36), ein erstes Antriebsmittel (30) zum Bewegen der bewegbaren Bühne (36) in einer Richtung (M), und ein zweites Antriebsmittel (41) zum Bewegen der Palette (P) in einer anderen Richtung (N, L) aufweist.

4. Palettenwechsler nach Anspruch 1, bei dem die bewegbare Schiene gleitend von einer festen Schiene gehaltert ist.

## Revendications

1. Changeur de palette attenant à une machine-outil comprenant deux pools de palettes fixes ayant chacun un rail fixe pour le transport d'une palette vers la machine-outil et depuis la machine-outil;
un pool de palette mobile (24) ayant un rail mobile,
des moyens pour déplacer le rail mobile de manière réciproque entre lesdits premier et second rails fixes,
**caractérisé en ce que** le pool de palettes mobile (24) est disposé à l'extrémité des rails fixes éloignés de la machine-outil et fait parti du changeur de palette.

2. Changeur de palette selon la revendication 1, où chaque rail présente une pluralité de galets pour guider les palettes.

3. Changeur de palette selon la revendication 1, où ledit pool de palette mobile comprend un palier mobile (36), un premier moyen d'entraînement (30) pour le déplacement du palier mobile (36) dans une direction (M) et un second moyen d'entraînement (41) pour déplacer la palette (P) dans une autre direction (N, L).

4. Changeur de palette selon la revendication 1, où ledit rail mobile est supporté en coulissant par un rail fixe.
